# EUROPÄISCHE PATENTANMELDUNG

(11) **EP 3 669 644 A1**
(43) Veröffentlichungstag der Anmeldung: **24.06.2020**
(21) Anmeldenummer: 18214111.9
(22) Anmeldetag: 19.12.2018
(51) Int. Cl.: A01K 29/00, A01K 11/00, G01B 3/08, G01B 3/10

(54) **MESSGERÄT SOWIE SYSTEM MIT DEMSELBEN UND COMPUTERGESTÜTZTES VERFAHREN ZUR ERFASSUNG VON KÖRPERMASSEN**

(71) Anmelder: Urban Holding GmbH, 27798 Hude (DE)
(72) Erfinder: Deininger, Andreas, 27798 Hude (DE)
(74) Vertreter: Manasse, Uwe

(57) **Zusammenfassung**

Messgerät (2000) zur Erfassung von Körpermaßen zum Zwecke der Gewichtsschätzung, insbesondere zur Entwicklungskontrolle bzw. zur Festlegung des optimalen Besamungszeitpunkts von Nutztieren, insbesondere von wachsenden Rindern (2013), umfassend ein integriertes Identifikations-Lesegerät (2012) zum Lesen von Identifikationen von Lebewesen, insbesondere wobei das Identifikations-Gerät ein RFID-Lesegerät ist, System mit demselben und computergestütztes Verfahren zur Erfassung von Körpermaßen.

## Beschreibung

Die vorliegende Erfindung betrifft ein Messgerät, ein System und ein Verfahren zur Erfassung von Körpermaßen, insbesondere zum Zweck der Gewichtsschätzung, insbesondere zur Entwicklungskontrolle bzw. zur Festlegung des optimalen Besamungszeitpunktes von Nutztieren, insbesondere von wachsenden Rindern.

Zumindest eine grobe Kenntnis des Körpergewichts ist beispielsweise für eine Entwicklungskontrolle bzw. für eine Festlegung des optimalen Besamungszeitpunktes von Nutztieren sehr hilfreich und sinnvoll. Aufgrund einer einfacheren Handhabung ist dafür eine Gewichtsschätzung praktikabel und ausreichend genau. Diese erfolgt beispielsweise anhand einer Bestimmung der Widerrist- oder Kreuzbeinhöhe, des Brustkorbumfangs oder der Beckenbreite. Dazu stehen beispielsweise eine Messlatte (Maßstabeinheit), eine Gewichtszange (Gewichtsschätzzange) (auch Becken- oder Hüftzange genannt) sowie ein flexibles Maßband zur Verfügung. Die Körpermaße, wie Widerrist- oder Kreuzbeinhöhe, Brustkorbumfang bzw. Beckenbreite, werden dann in eine jeweilige Formel zur Schätzung des Körpergewichts des Nutztieres eingesetzt.

Der vorliegenden Erfindung liegt die Aufgabe zugrunde, eine einfache Erfassung von Körpermaßen zum Zwecke der Gewichtsschätzung von Nutztieren, insbesondere zur Entwicklungskontrolle bzw. zur Festlegung des optimalen Besamungszeitpunktes von Nutztieren, insbesondere von wachsenden Rindern, zu ermöglichen.

Erfindungsgemäß wird die vorgenannte Aufgabe gelöst durch ein Messgerät zur Erfassung von Körpermaßen zum Zwecke der Gewichtsschätzung, insbesondere zur Entwicklungskontrolle bzw. zur Festlegung des optimalen Besamungszeitpunktes von Nutztieren, insbesondere von wachsenden Rindern, umfassend ein integriertes Identifikations-Lesegerät zum Lesen von Identifikationen von Nutztieren, insbesondere wobei das Identifikations-Gerät ein RFID-Lesegerät ist.

Außerdem wird die Aufgabe gelöst durch ein System zur Erfassung von Körpermaßen zum Zwecke der Gewichtsschätzung, insbesondere zur Entwicklungskontrolle bzw. zur Festlegung des optimalen Besamungszeitpunktes von Nutztieren, insbesondere von wachsenden Rindern, umfassend mindestens ein Messgerät nach einem der Ansprüche 1 bis 10, und einen prozessrechnergesteuerten Tierfütterungsautomaten, wobei der Tierfütterungsautomat eine Datenempfangs- und/oder -übertragungseinrichtung aufweist, insbesondere wobei der Tierfütterungsautomat eine Speichereinrichtung zur Speicherung einer Messliste (Aktionsliste für Körpermaßmessung) mit Identifikationsdaten von zu wiegenden Nutztieren aufweist und die Datenübertragungseinrichtung zum Übertragen der Messliste an das Messgerät eingerichtet ist, und/oder insbesondere wobei der Tierfütterungsautomat eine Anzeigeeinrichtung zum Anzeigen von erfassten Körpermaßdaten und/oder ermittelten Körpergewichten und/oder erfassten Identifikationsdaten aufweist, wobei der Tierfütterungsautomat eine Datenverarbeitungseinrichtung zum Verarbeiten, insbesondere Auswerten, von erfassten Körpermaßen und gegebenenfalls auch Visualisieren von erfassten Körpermaßdaten und/oder ermittelten Körpergewichten und/oder erfassten Identifikationsdaten aufweist, und/oder insbesondere wobei der Tierfütterungsautomat eine Einrichtung zur Fernsteuerung aufweist.

Identifikationsdaten können z. B. Tiererkennungsdaten sein.

Ferner wird die Aufgabe gelöst durch ein computergestütztes Verfahren zur Erfassung von Körpermaßen zum Zwecke der Gewichtsschätzung, insbesondere zur Entwicklungskontrolle bzw. zur Festlegung des optimalen Besamungszeitpunktes von Nutztieren, insbesondere von wachsenden Rindern, umfassend:
- Erzeugen einer Messliste von zu wiegenden Nutztieren, wobei die Messliste eine Auflistung von Identifikationen der zu wiegenden Nutztiere enthält,
- Erfassen der Körpermaße der Nutztiere gemäß der Messliste, indem die Nutztiere anhand der Identifikation ermittelt und mindestens ein Körpermaß derselben, insbesondere mittels eines Messgerätes nach einem der Ansprüche 1 bis 10, gemessen wird, und
- für jedes Nutztier gemäß der Messliste Speichern der erfassten Körpermaßdaten und ermittelten Identifikationsdaten.

Mit "zu wiegenden Nutztieren" sollen Nutztiere gemeint sein, deren Körpergewicht ermittelt bzw. geschätzt werden soll.

Gemäß einer besonderen Ausführungsform umfasst das Messgerät eine Maßbandeinheit (2010), vorzugsweise wobei die Maßbandeinheit eine digitale lineare Messeinrichtung umfasst. Alternativ kann vorgesehen sein, dass das Messgerät eine Maßstabeinheit umfasst.

Wiederum alternativ kann vorgesehen sein, dass das Messgerät eine Gewichtszange umfasst. Die Gewichtszange kann auch als Gewichtsschätzzange bezeichnet werden.

Gemäß einer besonderen Ausführungsform der vorliegenden Erfindung weist das Messgerät eine Datenübertragungseinrichtung zum Übertragen von erfassten Körpermaßen und/oder von erfassten Identifikationsdaten, vorzugsweise als Datenpaar, über eine Funkverbindung, insbesondere WLAN, an eine Empfangsstation, insbesondere einen prozessrechnergesteuerten Tierfütterungsautomaten, auf, und/oder weist es eine Datenübertragungseinrichtung zum Übertragen von erfassten Körpermaßen und/oder von erfassten Identifikationsdaten, vorzugsweise als Datenpaar, über eine Kabelverbindung oder Steckverbindung, insbesondere eine Universal Serial Bus, USB, -Verbindung, an eine Empfangsstation, insbesondere einen prozessrechnergesteuerten Tierfütterungsautomaten, auf.

Weiterhin kann vorgesehen sein, dass es eine Datenspeichereinrichtung zum Speichern von erfassten Körpermaßen und/oder von erfassten Identifikationsdaten, vorzugsweise als Datenpaar, aufweist, und/oder dass es eine Anzeigeeinrichtung zum Anzeigen von erfassten Körpermaßen und/oder von ermittelten Körpergewichten und/oder erfassten Identifikationsdaten aufweist, und/oder dass es eine Datenverarbeitungseinrichtung zum Verarbeiten, insbesondere Auswerten, und gegebenenfalls auch Visualisieren von erfassten Körpermaßen und/oder erfassten Identifikationsdaten aufweist, und/oder dass es als Anwendungsserver für eine Softwareanwendung, vorzugsweise eine Herdenmanagementsoftware, fungiert.

Insbesondere kann dabei vorgesehen sein, dass es eine Datenempfangseinrichtung zum Empfangen einer Messliste mit Identifikationsdaten von zu wiegenden Nutztieren von der Empfangsstation aufweist, und/oder die Datenübertragungseinrichtung gestaltet ist, um eine Liste mit erfassten Identifikationsdaten und/oder erfassten Körpermaßdaten an die Empfangsstation zu übertragen.

Vorteilhafterweise weist das Messgerät ein integriertes Thermometer, insbesondere digitales Thermometer, wie z.B. digitales Rektal- oder Ohrthermometer, auf.

Vorteilhafterweise dient die Datenübertragungseinrichtung auch zum Übertragen von erfassten Körpertemperaturdaten über die oder eine Funkverbindung, insbesondere WLAN, an die Empfangsstation, insbesondere an einen prozessrechnergesteuerten Tierfütterungsautomaten, und/oder dient die Datenübertragungseinrichtung auch zum Übertragen von erfassten Körpertemperaturdaten über die oder eine Kabelverbindung oder Steckverbindung, insbesondere eine Universal Serial Bus, USB, -Verbindung, an die Empfangsstation, insbesondere an einen prozessrechnergesteuerten Tierfütterungsautomaten.

Vorteilhafterweise dient die Datenspeichereinrichtung auch zum Speichern von erfassten Körpertemperaturdaten, und/oder dient die oder eine Anzeigeeinrichtung zum Anzeigen von erfassten Körpertemperaturdaten, und/oder dient die Datenverarbeitungseinrichtung auch zum Verarbeiten, insbesondere Auswerten, und gegebenenfalls auch Visualisieren der erfassten Körpertemperaturdaten, und/oder fungiert sie als Anwendungsserver für eine Softwareanwendung, vorzugsweise eine Herdenmanagementsoftware.

Bei dem Verfahren kann vorgesehen sein, dass beim Erfassen der Körpermaße der Nutztiere gemäß der Messliste die Nutztiere anhand der elektronischen oder visuellen Identifikation der Nutztiere oder einer indirekten Identifikation, beispielsweise einer Stallnummer (Iglu- oder Hüttennummer), ermittelt werden, insbesondere wobei die visuelle(n) Identifikation(en) auf einer Anzeige, insbesondere eines Messgerätes nach einem der Ansprüche 1 bis 10 oder eines Tierfütterungsautomaten angezeigt wird/werden.

Vorteilhafterweise erfolgt das Erzeugen einer neuen Messliste automatisch, insbesondere mittels eines Tierfütterungsautomaten und/oder mittels eines Messgerätes nach einem der Ansprüche 1 bis 10.

Weitere Merkmale und Vorteile der Erfindung ergeben sich aus den beigefügten Ansprüchen und aus der nachfolgenden Beschreibung, in der mehrere Ausführungsbeispiele anhand der schematischen Zeichnungen im Einzelnen erläutert werden. Dabei zeigt:
- Figur 1: ein Messgerät gemäß einer besonderen Ausführungsform der vorliegenden Erfindung in perspektivischer Ansicht;
- Figur 2: das Messgerät von Figur 1 in perspektivischer Ansicht von der gegenüberliegenden Seite;
- Figur 3: Verfahrensabläufe bei der Abarbeitung einer Aktions- bzw. Messliste in einem Offline-Modus gemäß einer besonderen Ausführungsform der vorliegenden Erfindung unter Verwendung des Messgerätes von Figur 1;
- Figur 4: einen Verfahrensablauf bei der Abarbeitung einer Aktions- bzw. Messliste bei mehreren Gruppen von Nutztieren gemäß einer besonderen Ausführungsform der vorliegenden Erfindung unter Verwendung des Messgerätes von Figur 1;
- Figur 5: Verfahrensabläufe bei der Erfassung von Körpermaßen von Nutztieren in einem Online-Modus gemäß einer besonderen Ausführungsform der vorliegenden Erfindung unter Verwendung des Messgerätes von Figur 1, links bei der spontanen Messung von Nutztieren, rechts beim Arbeiten gemäß einer Aktions- bzw. Messliste;
- Figur 6: Verfahrensabläufe bei der Erfassung von Körpermaßen von Nutztieren, insbesondere von Jungrindern und/oder Kühen und der Weitergabe der erfassten Daten an ein EDV-gestütztes Managementsystem, insbesondere eine Herdenmanagementsoftware, gemäß einer weiteren besonderen Ausführungsform der vorliegenden Erfindung unter Verwendung des Messgerätes von Figur 1;
- Figur 7: ein Messgerät gemäß einer weiteren besonderen Ausführungsform mit einer Maßstabeinheit mit einem vertikal verschiebbaren Schiebestück zur Bestimmung der Widerristhöhe oder der Kreuzbeinhöhe bei einem wachsenden Rind; und
- Figur 8: ein Messgerät gemäß einer weiteren besonderen Ausführungsform mit einer Gewichtsschätzzange mit einer integrierten Gewichtsskala zur Bestimmung der Beckenbreite bei einem wachsenden Rind.

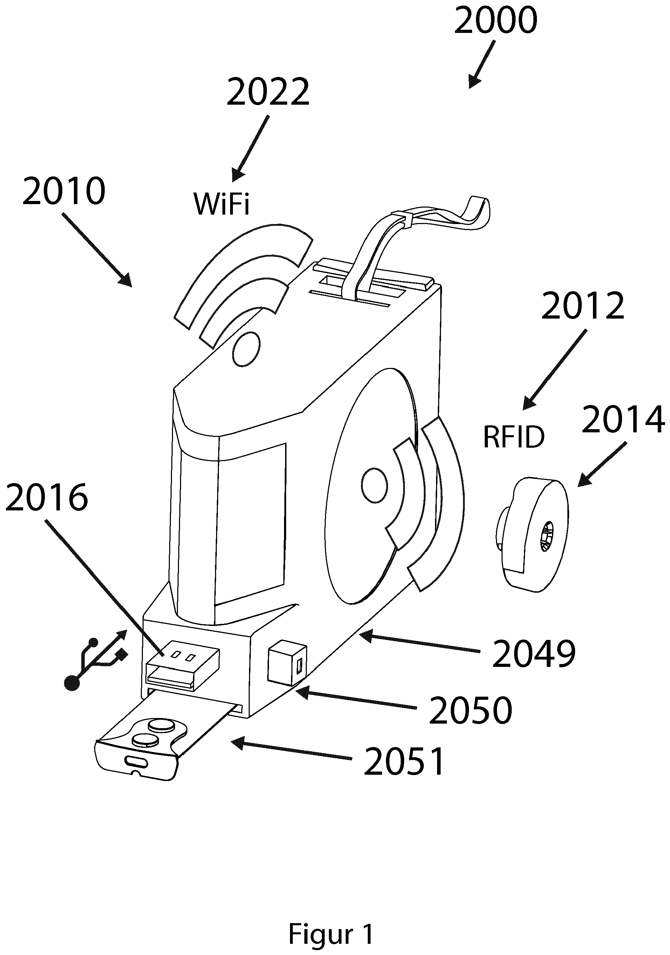

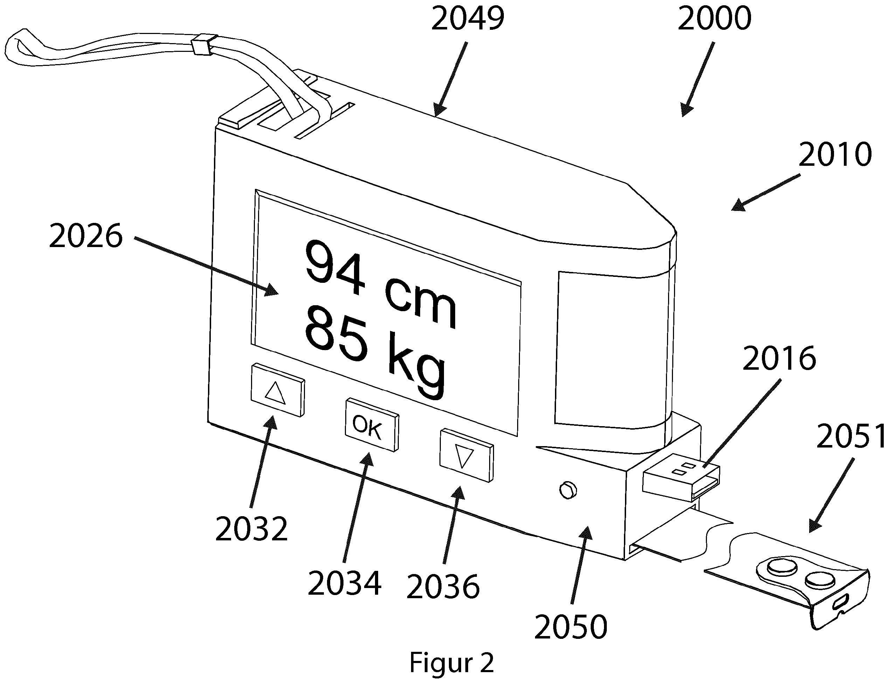

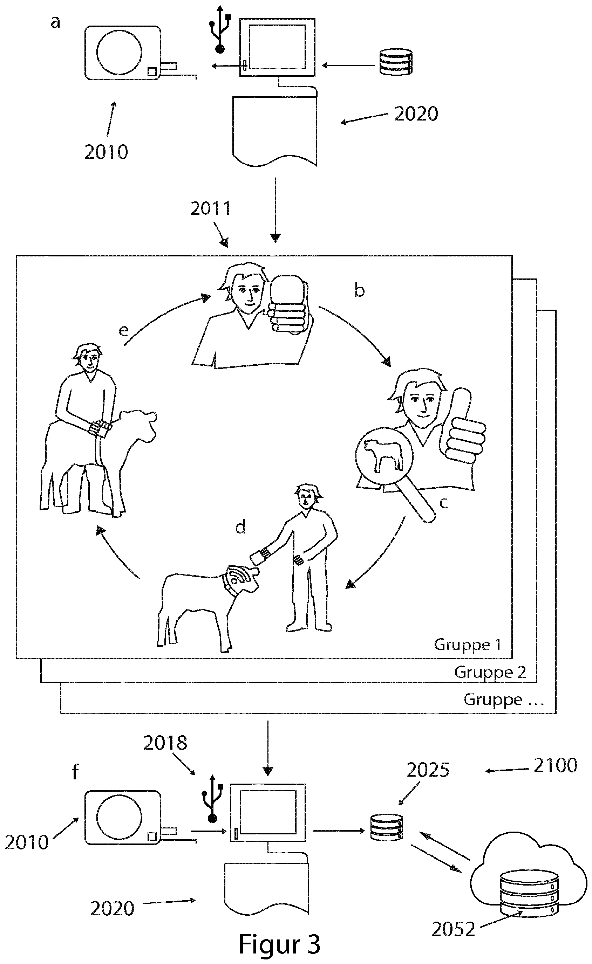

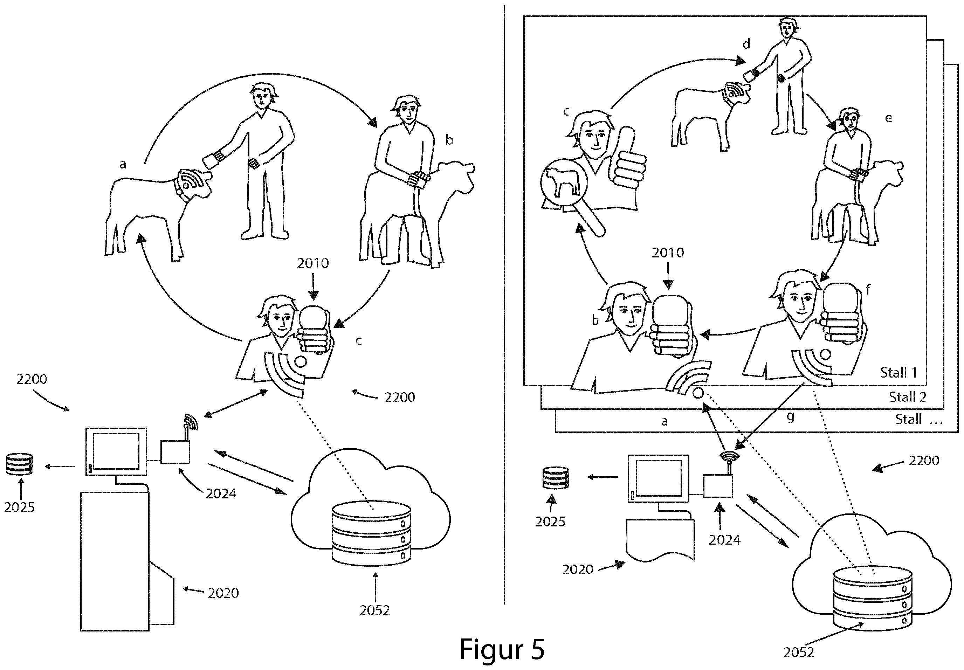

Die Figuren 1 und 2 zeigen ein Messgerät 2000 mit einer Maßbandeinheit 2010. Die Maßbandeinheit 2010 umfasst ein Gehäuse 2049, eine digitale lineare Messeinrichtung 2050 mit einem flexiblen Maßband (Rollbandmaß) 2051 sowie ein RFID-Lesegerät 2012 (ISO 11784/85) für einen Transponder 14 zur Tierkennzeichnung. Der Transponder 14 kann je nach Einsatz zur Identifikation eines Einzeltieren oder beispielsweise eines Einzelstalls (Einzeliglu, Kälberhütte) dienen. Zudem enthält die Maßbandeinheit 2010 einen USB-Stecker 2016 zur Kopplung mit einer USB-Buchse 2018 (siehe Figur 3) eines, vorzugsweise prozessrechnergesteuerten, Tierfütterungsautomaten 2020 (siehe Figuren 3 und 5), der genauso wie die Maßbandeinheit 2010 zu einem System 2100 (siehe Figur 3) bzw. 2200 (siehe Figur 5) gehört. Zumindest in einer besonderen Ausführungsform kann die Maßbandeinheit 2010 auch eine integrierte WLAN-Sende- und Empfangseinheit 2022 aufweisen. Als Gegenstück weist dann der Tierfütterungsautomat 2020 ebenfalls eine WLAN-Sende- und Empfangseinheit 2024 auf (siehe Figur 5). Selbstverständlich könnte auch eine andere Funktechnik zum Einsatz kommen.

Mittels der Messeinrichtung 2050 lässt sich ein analoges Längenmaß, das mittels des flexiblen Maßbandes 2051 erhältlich ist, beispielsweise über Bilderfassung von Markierungen auf dem Maßband 2051 oder über eine Einrichtung zur Erfassung der Umdrehungen einer Spule, auf die das analoge Maßband 2051 im Ausgangszustand aufgewickelt ist, in digitale Längenmesswerte umwandeln. Diese digitalen Längenmesswerte können zum Beispiel dem gemessenen Brustumfang des Nutztieres entsprechen. Durch entsprechende beispielsweise Umrechnungstabellen oder beispielsweise Formeln kann dann auf das Gewicht des Nutztieres geschlossen werden.

Das Messgerät 2000 mit der Maßbandeinheit 2010 gemäß den Figuren 1 und 2 kann beispielhaft wie folgt eingesetzt werden (s. Figur 3): Ein Benutzer 2011 erhält von dem Tierfütterungsautomaten 2020 eine Messliste (Aktionsliste), das heißt in diesem Beispiel eine Liste, die die VIDs (Visual Identification number) und EIDs (Electronic Identification number) von den zu wiegenden Rindern enthält. Der Benutzer steckt dazu den USB-Stecker 2016 der Maßbandeinheit 2010 in die USB-Buchse 2018 des Tierfütterungsautomaten 2020 und erhält dann entweder manuell oder automatisch auf seiner Maßbandeinheit 2010 die (Messliste) (siehe Buchstabe a in Figur 3). Danach begibt sich der Benutzer 2011 beispielsweise in eine Gruppe 1. Er arbeitet nacheinander die Messliste in seiner Maßbandeinheit 2010 ab. Dazu liest er beispielsweise ein erstes Jungrind in der Kontrollliste (siehe Buchstabe b in Figur 3) und sucht nach diesem Jungrind anhand der visuellen Identifikation (Visual Identification (VID)) (siehe Buchstabe c in Figur 3). Dazu wird in der Maßbandeinheit 2010 neben der EID zusätzlich auch noch die zugehörige VID angezeigt. Trägt das Tiere keine VID, so kann das Jungrind anhand des Lesens seiner EID mittels des RFID-Lesegeräts 2012 (siehe Buchstabe d in Figur 3) identifiziert werden. Wenn der Benutzer das Tier gefunden hat, an welchem eine Messung durchgeführt werden soll, führt er in diesem Beispiel mittels der Maßbandeinheit 2010 eine Messung eines Körpermaßes durch (siehe Buchstabe e in Figur 3). Die EID und/oder VID und das gemessene Körpermaß werden in einer Datenspeichereinrichtung 2025 beispielsweise in der Maßbandeinheit 2010 gespeichert.

Danach kann der Benutzer die Daten, z. B. Datenpaare, auf den Tierfütterungsautomaten 2020 übertragen, indem er den USB-Stecker 2016 in die USB-Buchse 2018 des Tierfütterungsautomaten 2020 steckt und dann die Daten manuell oder automatisch überträgt (siehe Buchstabe f in Figur 3). Die Daten in der Maßbandeinheit 2010 können dann wieder gelöscht werden.

Die Daten im Tierfütterungsautomaten 2020 können bei Bedarf verarbeitet bzw. weiterverarbeitet und aufbereitet sowie grafisch dargestellt werden. Beispielsweise können die Datensätze von Jungrindern dazu benutzt werden, eine Aktionsliste für die anstehende Besamung der Tiere zu erzeugen.

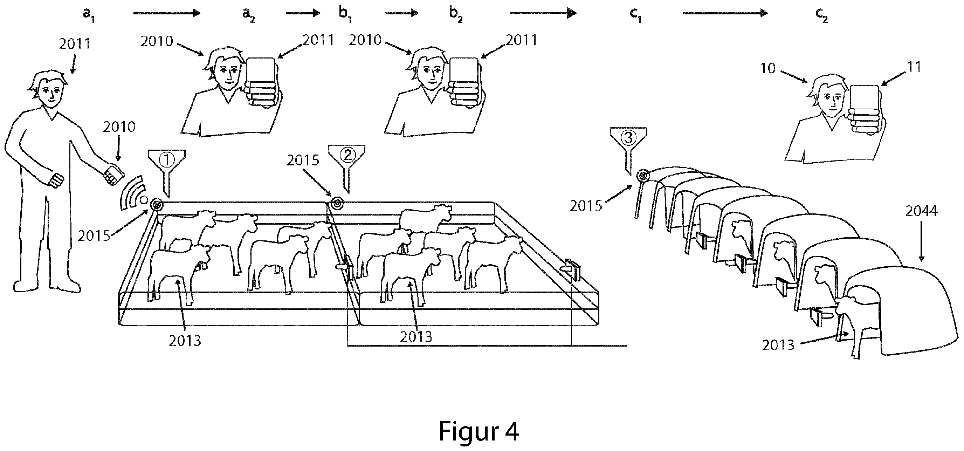

Im Allgemeinen werden Jungrinder in Gruppen von ca. zehn bis zwanzig Tieren gehalten. In großen Betrieben trifft man zehn oder mehr von diesen Jungrindergruppen an. In einem solchen Fall begibt sich der Landwirt zur Vermessung der Jungrinder von Gruppe zu Gruppe bzw. von Stall zu Stall (wenn die Gruppen in getrennten Stallungen untergebracht sind). Die komplette Messliste (Aktionsliste) könnte in einem solchen Fall z. B. hundert oder mehr Tiere umfassen. Zum effizienten Arbeiten mit den Messlisten ist eine Gruppenfilterung von Vorteil. Dann kann der Landwirt in einem Jungrinderstall (siehe Buchstabe a in Figur 4) zu einer Tiergruppe gehen, einen Gruppenfilter auf die Messliste anwenden und die Körpermaße und/oder die Temperatur der gefilterten Untergruppe von Tieren erfassen. Das Anwenden des Gruppenfilters kann entweder über die Menüführung der Maßbandeinheit 2010 ausgelöst werden oder aber vorzugsweise dadurch, dass der Landwirt einen am Eingangstor des Gruppenabteils befindlichen, eindeutig kodierten Gruppentransponder einscannt. Danach geht er zu einer anderen Tiergruppe (ggf. in einem getrennten Jungrinderstall aufgestallt) (siehe Buchstabe b in Figur 4), wendet einen Gruppenfilter an und ermittelt die Körpermaße und/oder Temperaturen von allen zu wiegenden Tieren in der anderen Gruppe und so weiter (siehe Buchstabe c in Figur 4). Durch Verwendung von Filtern wird die Listenansicht auf eine kleine Anzahl von Tieren, die der Landwirt geeignet handhaben kann, begrenzt.

Bei den in der Figur 5 gezeigten Verfahren und dem System 2200 kommt beispielsweise eine mit WLAN ausgestattete Maßbandeinheit 2010, wie z. B. die in die Figuren 1 und 2 gezeigte Maßbandeinheit, zum Einsatz. In der Figur 5 wird zwischen dem Fall, dass der Landwirt selbst spontan die Körpermaße von Tieren von Interesse vermisst (linke Seite), und dem Fall unterschieden, dass der Benutzer 2011 (Landwirt) von einem Tierfütterungsautomaten 2020 eine Messliste (Aktionsliste) auf seine Maßbandeinheit 2010 (rechte Seite), diesmal aber über eine WLAN-Verbindung (siehe Buchstabe c in Figur 5 links und Buchstaben a in Figur 5 rechts) erhält. In der Figur 5 entsprechen die Schritte b-e den Schritten b-e in Figur 3. Die WLAN-Lösung hat den Vorteil, dass die Daten von der Maßbandeinheit 2010 schon während oder kurz nach der Messung an einen Tierfütterungsautomaten 2020 weitergegeben werden können. Aber selbst dann, wenn die Daten erst nach Vornahme der letzten Messung übertragen werden, so muss sich dazu der Benutzer nicht zum Tierfütterungsautomaten 2020 begeben und die Maßbandeinheit in die Buchse stecken.

Alternativ oder zusätzlich zur Weiterleitung der Daten an einen Tierfütterungsautomaten kann diese auch z. B. an einen Farm-Management-PC oder eine cloudbasierte Datenspeicherlösung erfolgen.

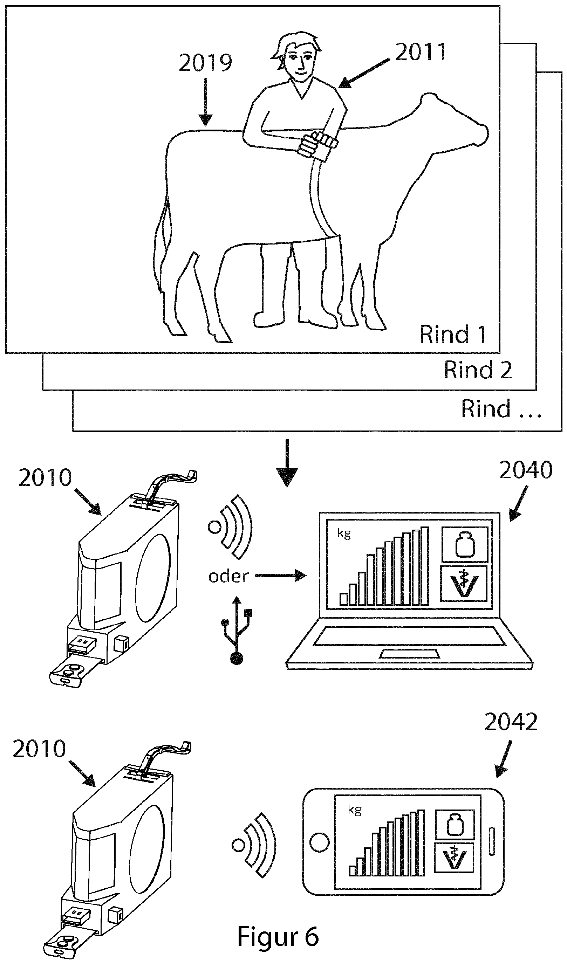

Sofern die Maßbandeinheit 2010 mit einer WLAN-Sende- und Empfangseinheit ausgestattet ist, kann es als WLAN-Zugangspunkt agieren, mit dem sich jedes Ethernet-fähige Client-Gerät verbinden kann. In einem solchen Fall kann jedes Gerät, auf dem ein Webbrowser laufen kann, wie zum Beispiel ein PC, ein Smartphone, ein Tablet usw., zur Erfassung und Anzeige bzw. Darstellung der gesammelten Körpermaßdaten und/oder ermittelten Körpergewichte und/oder Temperaturdaten etc. verwendet werden. Dies bedeutet jedoch, dass alle Tier- und Körpermaßdaten und/oder Temperaturdaten in der Maßbandeinheit gespeichert werden müssen. Figur 6 zeigt dies beispielhaft für einen Laptop 2040 und für ein Smartphone 2042. Auf dem Laptop 2040 kann beispielsweise eine Fernmanagement-Software laufen. Die Datenübertragung zum Laptop kann beispielsweise wöchentlich entweder über WLAN oder über USB erfolgen.

Die Maßbandeinheit 2010 kann auch eine vorinstallierte Herdenmanagement-Software (als Web-App) aufweisen. Sowohl Smartphones als auch Tablets können sich dann unter Nutzung eines beliebigen Webbrowsers mit der Maßbandeinheit verbinden und die als Web-App angebotene Herdenmanagement-Software ausführen.

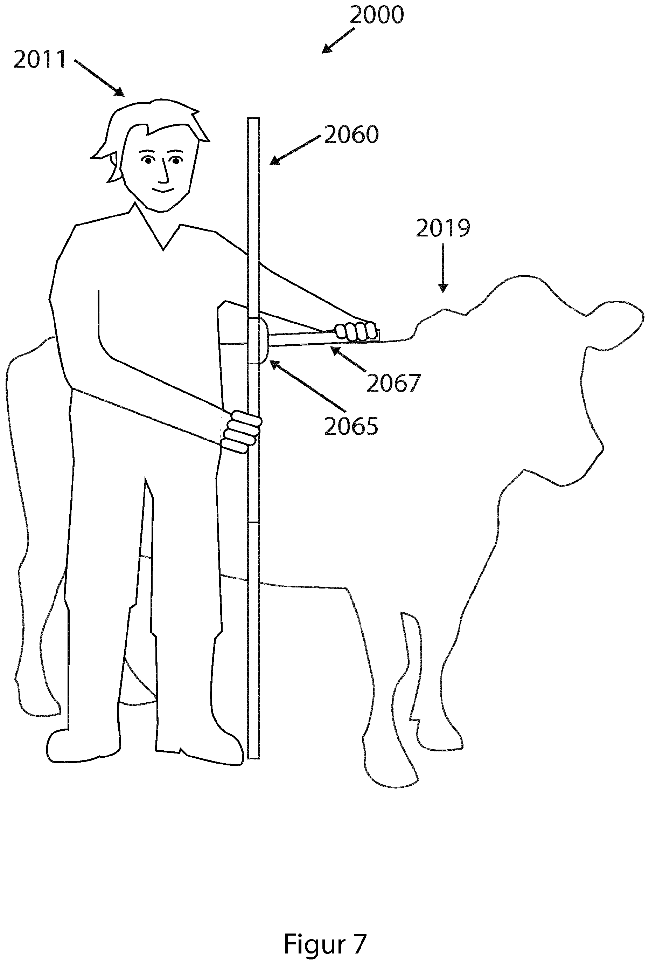

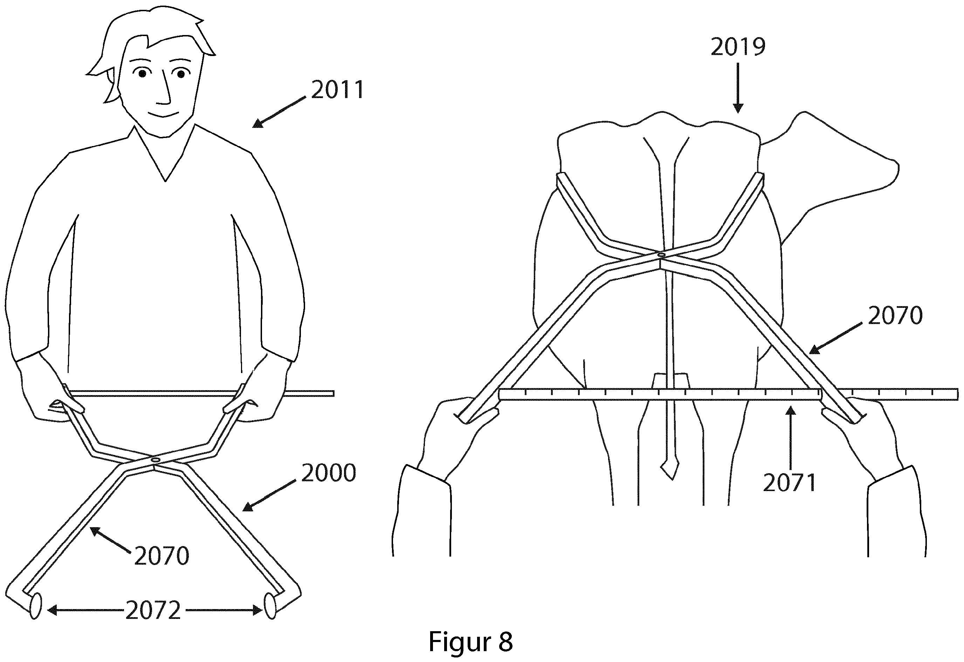

Die Figuren 7 und 8 zeigen alternative Gerätschaften zur Bestimmung von Körpermaßen zu der in den Figuren 1 - 6 gezeigten Maßbandeinheit 2010. So zeigt Figur 7 einen vertikal aufzustellenden Messstab (Maßstabeinheit 2060) mit einem vertikal verschiebbaren Schiebestück 2065 mit einem horizontalen Ausleger 2067, mit dessen Hilfe die Widerristhöhe und/oder die Kreuzbeinhöhe des Tieres (Jungrind 2019) gemessen werden können. Diese beiden Körpermaße korrelieren sehr eng mit dem tatsächlichen Gewicht des Tieres. Figur 8 zeigt eine Gewichtsschätzzange 2070 mit zwei an den Hüfthöcker zu platzierenden Messbacken 2072, mit deren Hilfe die Beckenbreite des Tieres erfasst werden kann. In einer speziellen Ausführungsform ist die Gewichtsschätzzange dabei so ausgeführt, dass das Schätzgewicht für das gemessene Tier auf einer integrierten Gewichtsskala 2071 unmittelbar abgelesen werden kann.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 2000: Messgerät
- 2010: Maßbandeinheit
- 2011: Benutzer
- 2012: RFID-Lesegerät
- 2013: Wachsendes Rind
- 2014: Transponder zur Identifikation eines Einzeltieres oder eines Einzelstalls
- 2015: Transponder zur Identifikation einer Tiergruppe
- 2016: USB-Stecker
- 2018: USB-Buchse
- 2019: Jungrind
- 2020: Tierfütterungsautomat
- 2024: WLAN-Sende- und Empfangseinheit
- 2025: Datenspeichereinrichtung
- 2026: Anzeigeeinrichtung
- 2032: Taste
- 2034: Taste
- 2036: Taste
- 2040: Laptop
- 2042: Smartphone
- 2044: Einzelstall, Einzeliglu
- 2049: Gehäuse
- 2050: Messeinrichtung
- 2051: Maßband
- 2052: Cloudbasierte Datenspeichereinrichtung
- 2060: Maßstabeinheit
- 2065: Schiebestück
- 2067: Ausleger
- 2070: Gewichtsschätzzange
- 2071: Gewichtsskala
- 2072: Messbacken
- 2100: System
- 2200: System

## Patentansprüche

1. Messgerät (2000) zur Erfassung von Körpermaßen zum Zwecke der Gewichtsschätzung, insbesondere zur Entwicklungskontrolle bzw. zur Festlegung des optimalen Besamungszeitpunkts von Nutztieren, insbesondere von wachsenden Rindern (2013), umfassend ein integriertes Identifikations-Lesegerät (60) zum Lesen von Identifikationen von Nutztieren, insbesondere wobei das Identifikations-Gerät ein RFID-Lesegerät (2012) ist.

2. Messgerät (2000) nach Anspruch 1, umfassend eine Maßbandeinheit (2010), vorzugsweise wobei die Maßbandeinheit eine digitale lineare Messeinrichtung umfasst.

3. Messgerät (2000) nach Anspruch 1, umfassend eine Maßstabeinheit.

4. Messgerät (2000) nach Anspruch 1, umfassend eine Gewichtszange.

5. Messgerät (2000) nach einem der vorangehenden Ansprüche, wobei es eine Datenübertragungseinrichtung zum Übertragen von erfassten Körpermaßen und/oder von erfassten Identifikationsdaten, vorzugsweise als Datenpaar, über eine Funkverbindung, insbesondere WLAN, an eine Empfangsstation, insbesondere einen prozessrechnergesteuerten Tierfütterungsautomaten, aufweist, und/oder wobei es eine Datenübertragungseinrichtung zum Übertragen von erfassten Körpermaßen und/oder von erfassten Identifikationsdaten, vorzugsweise als Datenpaar, über eine Kabelverbindung oder Steckverbindung, insbesondere eine Universal Serial Bus, USB, -Verbindung, an eine Empfangsstation, insbesondere einen prozessrechnergesteuerten Tierfütterungsautomaten, aufweist.

6. Messgerät (2000) nach einem der vorangehenden Ansprüche, wobei es eine Datenspeichereinrichtung (2025) zum Speichern von erfassten Körpermaßen und/oder von erfassten Identifikationsdaten, vorzugsweise als Datenpaar, aufweist, und/oder wobei es eine Anzeigeeinrichtung (2026) zum Anzeigen von erfassten Körpermaßen und/oder erfassten Identifikationsdaten aufweist, und/oder wobei es eine Datenverarbeitungseinrichtung zum Verarbeiten, insbesondere Auswerten, und gegebenenfalls auch Visualisieren von erfassten Körpermaßen und/oder erfassten Identifikationsdaten aufweist, und/oder wobei es als Anwendungsserver für eine Softwareanwendung, vorzugsweise eine Herdenmanagementsoftware, fungiert.

7. Messgerät (2000) nach Anspruch 5 oder 6, wobei es eine Datenempfangseinrichtung zum Empfangen einer Messliste mit Identifikationsdaten von zu wiegenden Nutztieren von der Empfangsstation aufweist, und/oder die Datenübertragungseinrichtung gestaltet ist, um eine Liste mit erfassten Identifikationsdaten und/oder erfassten Körpermaßdaten, an die Empfangsstation zu übertragen.

8. Messgerät (2000) nach einem der vorangehenden Ansprüche, wobei es ein integriertes Thermometer, insbesondere digitales Thermometer, wie z.B. digitales Rektal- oder Ohrthermometer, aufweist.

9. Messgerät (2000) nach Anspruch 8, wobei die Datenübertragungseinrichtung auch zum Übertragen von erfassten Körpertemperaturdaten über die oder eine Funkverbindung, insbesondere WLAN, an die Empfangsstation, insbesondere an einen prozessrechnergesteuerten Tierfütterungsautomaten (2020), dient, und/oder wobei die Datenübertragungseinrichtung auch zum Übertragen von erfassten Körpertemperaturdaten über die oder eine Kabelverbindung oder Steckverbindung, insbesondere eine Universal Serial Bus, USB, -Verbindung, an die Empfangsstation, insbesondere an einen prozessrechnergesteuerten Tierfütterungsautomaten, dient.

10. Messgerät (2000) nach Anspruch 8, wobei die Datenspeichereinrichtung (2025) auch zum Speichern von erfassten Körpertemperaturdaten dient, und/oder wobei die oder eine Anzeigeeinrichtung zum Anzeigen von erfassten Körpertemperaturdaten dient, und/oder wobei die Datenverarbeitungseinrichtung auch zum Verarbeiten, insbesondere Auswerten, und gegebenenfalls auch Visualisieren der erfassten Körpertemperaturdaten dient, und/oder wobei sie als Anwendungsserver für eine Softwareanwendung, vorzugsweise eine Herdenmanagementsoftware, fungiert.

11. System (2100; 2200) zur Erfassung von Körpermaßen zum Zwecke der Gewichtsschätzung, insbesondere zur Entwicklungskontrolle bzw. zur Festlegung des optimalen Besamungszeitpunkts von Nutztieren, insbesondere von wachsenden Rindern, umfassend
mindestens ein Messgerät (2000) nach einem der Ansprüche 1 bis 10, und
einen prozessrechnergesteuerten Tierfütterungsautomaten (2020),
wobei der Tierfütterungsautomat (2020) eine Datenempfangs- und/oder -übertragungseinrichtung aufweist, insbesondere wobei der Tierfütterungsautomat eine Speichereinrichtung zur Speicherung einer Messliste mit Identifikationsdaten von zu wiegenden Nutztieren aufweist und die Datenübertragungseinrichtung zum Übertragen der Messliste an das Messgerät (2000) eingerichtet ist, und/oder insbesondere wobei der Tierfütterungsautomat eine Anzeigeeinrichtung zum Anzeigen von erfassten Körpermaßdaten und/oder ermittelten Körpergewichten und/oder erfassten Identifikationsdaten aufweist, wobei der Tierfütterungsautomat eine Datenverarbeitungseinrichtung zum Verarbeiten, insbesondere Auswerten, von erfassten Körpermaßen und gegebenenfalls auch Visualisieren von erfassten Körpermaßdaten und/oder ermittelten Körpergewichten und/oder erfassten Identifikationsdaten aufweist, und/oder insbesondere wobei der Tierfütterungsautomat eine Einrichtung zur Fernsteuerung aufweist.

12. Computer-gestütztes Verfahren zur Erfassung von Körpermaßen zum Zwecke der Gewichtsschätzung, insbesondere zur Entwicklungskontrolle bzw. zur Festlegung des optimalen Besamungszeitpunkts von Nutztieren, insbesondere von wachsenden Rindern, umfassend:
- Erzeugen einer Messliste von zu wiegenden Nutztieren, wobei die Messliste eine Auflistung von Identifikationen der zu wiegenden Nutztiere enthält,
- Erfassen der Körpermaße der Nutztiere gemäß der Messliste, indem die Nutztiere anhand der Identifikation ermittelt und mindestens ein Körpermaß derselben, insbesondere mittels eines Messgerätes (2000) nach einem der Ansprüche 1 bis 10, gemessen wird, und
- für jedes Nutztier gemäß der Messliste Speichern der erfassten Körpermaßdaten und ermittelten Identifikationsdaten.

13. Verfahren nach Anspruch 12, wobei beim Erfassen der Körpermaße der Nutztiere gemäß der Messliste die Nutztiere anhand der elektronischen oder visuellen Identifikation der Nutztiere oder einer indirekten Identifikation, beispielsweise einer Stallnummer (Iglu- oder Hüttennummer), ermittelt werden, insbesondere wobei die visuelle(n) Identifikation(en) auf einer Anzeige, insbesondere eines Messgerätes (2000) nach einem der Ansprüche 1 bis 10 oder eines Tierfütterungsautomaten (2020) angezeigt wird/werden.

14. Verfahren nach einem der Ansprüche 12 oder 13, wobei das. Erzeugen einer neuen Messliste automatisch, insbesondere mittels eines Tierfütterungsautomaten (2020) und/oder mittels eines Messgerätes (2000) nach einem der Ansprüche 1 bis 10, erfolgt.
